# EUROPÄISCHE PATENTSCHRIFT

(11) **EP 3 571 095 B1**
(45) Veröffentlichungstag und Bekanntmachung des Hinweises auf die Patenterteilung: **24.02.2021**
(21) Anmeldenummer: 18700740.6
(22) Anmeldetag: 16.01.2018
(51) Int. Cl.: B60R 13/04, B62D 25/02, B62D 35/00

(54) **VERKLEIDUNGSANORDNUNG ZUR VERKLEIDUNG EINES KAROSSERIEELEMENTS EINES FAHRZEUGS**
CLADDING ARRANGEMENT FOR CLADDING A BODY ELEMENT OF A VEHICLE
ENSEMBLE D'HABILLAGE D'UN ÉLÉMENT DE CARROSSERIE D'UN VÉHICULE

(30) Priorität: 18.01.2017 DE 102017000394
(43) Veröffentlichungstag der Anmeldung: 27.11.2019
(73) Patentinhaber: Daimler AG, 70372 Stuttgart (DE)
(72) Erfinder: HAHN, Samuel, 71034 Böblingen (DE)
(74) Vertreter: JENSEN & SON
(86) Internationale Anmeldenummer: PCT/EP2018/050920
(87) Internationale Veröffentlichungsnummer: WO 2018/134164

(56) Entgegenhaltungen:
- DE-A1- 3 613 301
- DE-A1-102004 045 382
- FR-A1- 2 729 114

## Beschreibung

Die Erfindung betrifft eine Verkleidungsanordnung zur Verkleidung eines Karosserieelements eines Fahrzeugs.

Aus der DE 10 2009 031 534 A1 geht eine gattungsgemäße Verkleidungsanordnung mit einem Verkleidungselement hervor, wobei das eine Verkleidungselement schwenkbar an zumindest einem weiteren Verkleidungselement gelagert ist. Eine solche Verkleidungsanordnung wird insbesondere verwendet, um stetig steigende Anforderungen an die Ergonomie und den Komfort von Fahrzeugen, insbesondere mit Blick auf die Bequemlichkeit beim Ein- und Aussteigen, mit Korrosionsschutzanforderungen für die Karosserie, insbesondere an Türen derselben, in Einklang zu bringen. Dabei zeigt sich insbesondere, dass Türunterkanten von Fahrzeugkarosserien durch eine Längsträgerverkleidung vor Steinschlägen und Schmutz geschützt werden, wobei die Längsträgerverkleidung über die Türunterkante in Fahrzeugbreitenrichtung hinausragt oder bündig mit der Tür abschließt. Beim Ein- und Aussteigen ist diese Längsträgerverkleidung aber den Beinen eines Nutzers des Fahrzeugs im Weg, was insbesondere für ältere Menschen oder für Personen mit eingeschränkter Mobilität problematisch sein kann. Dieses Problem verschärft sich, wenn die Fahrzeugtür bei einem in einer Garage geparkten Fahrzeug nicht weit geöffnet werden kann. Es ist daher vorgesehen, dass das Verkleidungselement der Verkleidungsanordnung aus einer ausgestellten Schutzstellung, in welcher es die Fahrzeugtür oder ein anderes Karosserieelement vor Steinschlag, anderweitiger Beschädigung, Schmutz und insbesondere Korrosion schützt, indem es bündig mit dieser abschließt oder sie überlappt, in eine eingeklappte Komfortstellung verschwenkt werden kann, in welcher Raum für die Beine eines Nutzers des Fahrzeugs beim Ein- und Aussteigen freigegeben wird.

Nachteilig bei der bekannten Verkleidungsanordnung ist dabei, dass kein Halt für das verschwenkbare Verkleidungselement in seinen verschiedenen Funktionsstellungen vorgesehen ist, sodass diese vom Verkleidungselement weder in definierter Weise angefahren noch in diesen Stellungen sicher gehalten werden kann. Beispielsweise können an dem Verkleidungselement angreifende Kräfte dieses aus seiner ausgestellten Schutzstellung in die eingeklappte Komfortstellung schwenken, ohne dass dies tatsächlich gewünscht ist.

Aus der DE 10 2004 045 382 A1 geht eine Verkleidungsanordnung für einen Seitenschweller eines Kraftfahrzeugs hervor, welche ein schwenkbar gelagertes Verkleidungselement umfasst, das zwischen einer ausgeklappten, ersten Funktionsstellung und einer eingeklappten, zweiten Funktionsstellung verstellbar ist. Dabei ist vorgesehen, dass das Verkleidungselement in der eingeklappten Funktionsstellung am zu verkleidenden Seitenschweller auf Anschlag anliegt. Die Verstellung des Verkleidungselements erfolgt aufgrund einer mit mechanischen Mitteln realisierten Zwangskopplung mit einer schwenkbar gelagerten Seitentür des Kraftfahrzeugs, so dass beim Öffnen und Schließen der Seitentür das Verkleidungselement mitverlagert wird. Nachteilig an der Verkleidungsanordnung ist die Abstimmung des Anschlagens des Verkleidungselements am Seitenschweller bei maximal geöffneter Seitentür, ohne dass dabei das Verkleidungselement verformt wird oder gegebenenfalls gar nicht erst zur Anlage an den Seitenschweller kommt.

Der Erfindung liegt die Aufgabe zugrunde, eine Verkleidungsanordnung zu schaffen, welche die genannten Nachteile nicht aufweist.

Zur Lösung dieser Aufgabe wird eine Verkleidungsanordnung mit den Merkmalen des Anspruchs 1 vorgeschlagen. Vorteilhafte Ausgestaltungen ergeben sich aus den Unteransprüchen.

Die zur Verkleidung eines Karosserieelements, insbesondere eines Seitenschwellers, eines Fahrzeugs dienende Verkleidungsanordnung umfasst ein schwenkbar gelagertes, erstes Verkleidungselement, das in eine erste Funktionsstellung und in eine zweite Funktionsstellung verlagerbar ist. Das erste Verkleidungselement ist vorzugsweise formstabil/formsteif ausgebildet. Im Zusammenhang mit dieser Erfindung wird unter den Begriffen "formstabil/formsteif" verstanden, dass das Verkleidungselement eine materialbedingte und/oder konstruktionsbedingte Eigensteifigkeit aufweist, die so groß ist, dass es insbesondere beim Verschwenken seine Ausgangsform beibehält, sofern zumindest keine äußeren Kräfte - außer natürlich die zur Verlagerung des Verkleidungselements erforderlichen Kräfte - auf das erste Verkleidungselement einwirken. Damit verhält sich das formstabile Verkleidungselement völlig anders als ein aus einer flexiblen Materialbahn hergestelltes Verkleidungselement, wie es aus dem Stand der Technik bekannt ist. Aufgrund der schwenkbaren Lagerung des Verkleidungselements und dessen formsteifen Eigenschaften ist klar, dass das Verkleidungselement ähnlich oder analog einer Klappe oder Klappenelements ausgebildet ist beziehungsweise wirkt.

Weiterhin weist die Verkleidungsanordnung ein zweites Verkleidungselement auf, das relativ zu dem ersten Verkleidungselement - und vorzugsweise relativ zu einer Fahrzeugkarosserie, an welcher die Verkleidungsanordnung angeordnet ist - feststeht, wobei das erste Verkleidungselement an dem zweiten Verkleidungselement schwenkbar angelenkt ist. Besonders bevorzugt ist das erste Verkleidungselement - in Längsrichtung der Verkleidungsanordnung gesehen - neben dem zweiten Verkleidungselement angeordnet; insbesondere sind das erste Verkleidungselement und das zweite Verkleidungselement - in Längsrichtung der Verkleidungsanordnung gesehen - nebeneinander angeordnet. Es ist bevorzugt vorgesehen, dass das erste Verkleidungselement in seiner ersten Funktionsstellung, also in der ausgestellten Schutzstellung, bündig mit dem zweiten Verkleidungselement abschließt. Besonders bevorzugt ist vorgesehen, dass das erste Verkleidungselement und das zweite Verkleidungselement gleichartig, insbesondere mit einer gleichen Querschnittskontur, ausgebildet sind. Somit können das erste Verkleidungselement und das zweite Verkleidungselement in der ersten Funktionsstellung bündig miteinander fluchten, was zum einen aus optischen Gründen und aus Designgründen vorteilhaft ist, wobei sich zum anderen eine besonders effiziente Schutzwirkung der Verkleidungsanordnung in der ersten Funktionsstellung ergibt.

Die erfindungsgemäße Verkleidungsanordnung weist weiterhin eine Verstelleinrichtung auf, die eingerichtet ist, um das erste Verkleidungselement von der ersten Funktionsstellung in die zweite Funktionsstellung und/oder von der zweiten Funktionsstellung in die erste Funktionsstellung zu verstellen. Insbesondere ist die Verstelleinrichtung bevorzugt eingerichtet, um das erste Verkleidungselement von der ersten Funktionsstellung in die zweite Funktionsstellung und zurück zu verstellen. Dabei ist vorgesehen, dass die Verstelleinrichtung eingerichtet ist, um das erste Verkleidungselement in wenigstens einer Funktionsstellung, die ausgewählt ist aus der ersten Funktionsstellung und der zweiten Funktionsstellung, und die auch als Sperrstellung bezeichnet wird, gegen eine Verlagerung aus der Sperrstellung heraus zu arretieren, das heißt zu sichern/fixieren. Dadurch ist es möglich, zumindest die wenigstens eine Sperrstellung in definierter Weise anzufahren und zu halten, wobei ein versehentliches Verschwenken des ersten Verkleidungselements aus der Sperrstellung heraus und insbesondere in Richtung der anderen Funktionsstellung der beiden Funktionsstellungen, vermieden werden kann. Dies erhöht die Funktionssicherheit der Verkleidungsanordnung und damit zugleich den Komfort für einen Nutzer, und/oder den Korrosionsschutz für eine die Verkleidungsanordnung aufweisende Karosserie, wobei wenigstens ein Karosserieteil, beispielsweise eine Tür, durch das erste Verkleidungselement insbesondere während einer Fahrt des Fahrzeugs sicher vor Steinschlag, Schmutz und damit letztlich auch Korrosion geschützt werden kann. Ein ungewolltes Verschwenken des ersten Verkleidungselements durch während der Fahrt auftretende Kräfte, beispielsweise durch Fahrtwind, ist sicher vermeidbar. Ferner weist die Verkleidungsanordnung wenigstens ein Anschlagelement auf, das so angeordnet ist, dass die Verstelleinrichtung in der wenigstens einen Sperrstellung mit dem wenigstens einen Anschlagelement an einem Anschlag oder an dem wenigstens einen Anschlagelement anliegt. Dadurch kann mit hoher Sicherheit ausgeschlossen werden, dass an dem Verkleidungselement angreifende Kräfte, beispielsweise verursacht durch ein beim Ein- oder Aussteigen auf das Verkleidungselement drauftretende Person, dieses aus seiner ausgestellten Schutzstellung in die eingeklappte Komfortstellung verschwenkt, ohne dass dies tatsächlich gewünscht ist. Die Festlegung einer definierten Endposition des Verkleidungselements mittels eines Anschlags beziehungsweise einer Anschlagsanordnung gewährleistet in vorteilhafter Weise reproduzierbare Spalt- und Fugenmaße zwischen dem Verkleidungselement und benachbarten Bauteilen.

Die erste Funktionsstellung ist vorzugsweise eine Schutzstellung, in welcher das erste Verkleidungselement in einer ausgestellten Position angeordnet ist, sodass es ein Karosserieteil, beispielsweise eine Tür, in Fahrzeugquerrichtung nach außen hin überragen oder mit diesem Karosserieteil bündig abschließen kann. Dadurch kann das in Fahrzeughochrichtung unterhalb der Tür angeordnet Verkleidungselement diese in der ausgestellten Schutzstellung sicher vor Steinschlag, Schmutz und letztlich Korrosion schützen. Die zweite Funktionsstellung ist vorzugsweise eine eingeklappte Komfortstellung, in welcher das erste Verkleidungselement derart eingeschwenkt ist, dass es Raum für Beine eines Nutzers des Fahrzeugs beim Ein- und Aussteigen freigibt. Es ist möglich, dass das erste Verkleidungselement aktiv durch einen Nutzer des Fahrzeugs von seiner ersten Funktionsstellung in seine zweite Funktionsstellung - und bevorzugt zurück - geschwenkt werden kann, beispielsweise durch direkte mechanische Einwirkungen auf das erste Verkleidungselement, durch Betätigen eines Druckknopfes oder Tasters, durch Auswahl eines Menüpunkts in einem elektronischen Bedienmenü, oder in anderer geeigneter Weise. Es ist aber auch möglich, dass das erste Verkleidungselement automatisch von seiner ersten in seine zweite Funktionsstellung - und vorzugsweise zurück - verlagerbar ist, beispielsweise dann, wenn ein Ein- und/oder Aussteigewunsch des Nutzers erkannt wird. Dies kann beispielsweise - im Fall des Einsteigens - am Hintergreifen eines Türgriffs, am öffnen der Tür, an einer Annäherung an die Tür, oder in anderer geeigneter Weise erkannt werden; im Fall des Aussteigens kann dies beispielsweise an einem Abstellen eines Antriebsaggregats des Fahrzeugs, am Hintergreifen eines inneren Türgriffs, am Öffnen der Tür, oder in anderer geeigneter Weise erkannt werden. Es ist insbesondere möglich, dass die Verstelleinrichtung zur Verlagerung des ersten Verkleidungselements dann angesteuert wird, wenn auch ein Lenkrad zur Verlagerung in eine Ausstiegsposition, beispielsweise zur Verlagerung nach oben in Fahrzeug-Hochrichtung, angesteuert wird.

Dass das erste Verkleidungselement in der Sperrstellung durch die Verstelleinrichtung arretiert ist, bedeutet insbesondere, dass es gegen eine Verlagerung aus der Sperrstellung heraus und insbesondere in die jeweils andere der wenigstens zwei Funktionsstellungen gesichert ist. Insbesondere ist es möglich, dass das erste Verkleidungselement durch die Verstelleinrichtung in der Sperrstellung verriegelt wird. Jedenfalls ist das erste Verkleidungselement in der Sperrstellung aufgrund der Arretierung durch die Verstelleinrichtung nicht ungewollt - das heißt insbesondere nicht ohne aktive Ansteuerung der Verstelleinrichtung oder Verlagerung durch die Verstelleinrichtung - lösbar. Vorzugsweise ist das erste Verkleidungselement nur durch Überwindung einer der Verlagerung entgegenwirkenden Kraft aus der Sperrstellung in die jeweils andere Funktionsstellung verlagerbar.

Es ist bevorzugt vorgesehen, dass das erste Verkleidungselement durch die Verstelleinrichtung in der Sperrstellung mit einer Kraft beaufschlagt ist, welche das erste Verkleidungselement in die Sperrstellung drängt.

Besonders bevorzugt ist vorgesehen, dass die Verstelleinrichtung eingerichtet ist, um das erste Verkleidungselement in beiden Funktionsstellungen, das heißt der ersten Funktionsstellung und der zweiten Funktionsstellung, zu arretieren, das heißt lagefest zu fixieren. Demnach handelt es sich in diesem Fall bei beiden Funktionsstellungen um Sperrstellungen.

Die Verstelleinrichtung weist vorzugsweise einen Aktor oder Motor auf, der mit dem ersten Verkleidungselement zu dessen Verschwenkung wirkverbunden ist. Vorzugsweise ist dem Aktor oder Motor ein Getriebe zugeordnet, über welches der Aktor oder Motor mit dem ersten Verkleidungselement wirkverbunden ist. Bei dem Getriebe handelt sich bevorzugt um ein selbsthemmendes Getriebe. Die selbsthemmende Eigenschaft des Getriebes führt - zusätzlich oder alternativ zu der im Folgenden noch beschriebenen Funktionsweise der Verstelleinrichtung - zu einer Arretierung des ersten Verkleidungselements in der Sperrstellung, da die Selbsthemmung einer Verlagerung desselben effektiv und effizient entgegenwirkt.

Gemäß einer Weiterbildung der Erfindung ist vorgesehen, dass die Verstelleinrichtung in der wenigstens einen Sperrstellung in einer Übertotpunktlage angeordnet ist. Alternativ oder zusätzlich ist es möglich, dass das erste Verkleidungselement in Kombination mit der Verstelleinrichtung in der wenigstens einen Sperrstellung in einer Übertotpunktlage angeordnet ist. Eine Übertotpunktlage für die Verstelleinrichtung, und/oder für das erste Verkleidungselement in Kombination mit derselben, stellt eine ebenso einfache und einfach zu realisierende wie wirksame Möglichkeit dar, das erste Verkleidungselement in der Sperrstellung zu arretieren. Da es für ein Verschwenken aus der Sperrstellung heraus in die jeweils andere Funktionsstellung des Überwindens eines zwischen den Funktionsstellungen angeordneten Totpunkts bedarf, muss die Verstelleinrichtung aktiv gegen eine der Verlagerung in die Übertotpunktlage entgegenwirkende Kraft wirken, um das erste Verkleidungselement aus der Sperrstellung heraus zu verschwenken. Umgekehrt wird durch die Übertotpunktlage sichergestellt, dass eine nicht von der Verstelleinrichtung eingeleitete, sondern vielmehr an dem ersten Verkleidungselement von außen angreifende Kraft, die dieses entgegen der Sperrstellung in die jeweils andere Funktionsstellung zu drängen versucht, nicht zu einer entsprechenden Verschwenkung führen kann, da diese Kraft - wie dies bei einer Übertotpunktlage stets der Fall ist - in eine von dem Totpunkt weg gerichtete Richtung und gerade nicht in Richtung des Totpunkts wirkt, wobei eine solche Kraft vorzugsweise in der Übertotpunktlage durch einen Anschlag abgestützt wird.

Nach einer Weiterbildung der Erfindung ist vorgesehen, dass die Verstelleinrichtung in der wenigstens einen Sperrstellung mit dem wenigstens einen Anschlagelement an einem Anschlag, oder aber an dem wenigstens einen Anschlagelement selbst anliegt, wobei sie durch eine in Richtung entgegen der Sperrstellung auf das erste Verkleidungselement wirkende Kraft gegen den Anschlag oder das Anschlagelement gedrängt wird. Eine solche Kraft, die an dem ersten Verkleidungselement angreift und versucht, dieses aus der Sperrstellung heraus in die jeweils andere Funktionsstellung zu drängen, wird dann durch das Anschlagelement und gegebenenfalls den Anschlag abgestützt, wobei die Verstelleinrichtung, da sie an dem Anschlagelement und/oder mit diesem an dem Anschlag anliegt, nicht in die durch die entsprechende Kraft vorgegebene Verlagerungsrichtung gedrängt werden kann. Das Anschlagelement ist bevorzugt kombiniert vorgesehen mit einer Übertotpunktlage in der Sperrstellung, wobei es zu einer Überwindung des Totpunkts insbesondere einer Verlagerung der Verstelleinrichtung von dem Anschlag weg bedarf.

Vorzugsweise weist die Verstelleinrichtung selbst das wenigstens eine Anschlagelement auf. Es ist besonders bevorzugt vorgesehen, dass beide Funktionsstellungen des ersten Verkleidungselements als Sperrstellungen ausgebildet sind, wobei bevorzugt ein Anschlagelement vorgesehen ist, das für beide Funktionsstellungen einen Sperranschlag bereitstellt. Es ist möglich, dass das Anschlagelement in einer der beiden Funktionsstellungen selbst an einem weiteren Anschlag anschlägt, wobei bevorzugt in der anderen der beiden Funktionsstellungen ein erster Teil der Verstelleinrichtung mit dem Anschlagelement sperrend zusammenwirkt, insbesondere an dem Anschlagelement anschlägt, wobei das Anschlagelement an einem anderen, zweiten Teil der Verstelleinrichtung angeordnet ist.

Besonders bevorzugt weist die Verstelleinrichtung eine durch den Aktor oder Motor - vorzugsweise vermittelt über das selbsthemmende Getriebe - angetriebene Exzenterscheibe auf, an der außermittig, also exzentrisch, ein Lenkerhebel mit einem ersten Ende schwenkbeweglich angelenkt ist, wobei der Lenkerhebel mit einem - in Längsrichtung des Lenkerhebels gesehen - gegenüberliegenden, zweiten Ende schwenkbeweglich an dem ersten Verkleidungselement angelenkt ist. Dabei greift der Lenkerhebel vorzugsweise mit seinem zweiten Ende an einem unterseitigen Vorsprung des ersten Verkleidungselements an. Ein Anlenkpunkt des Lenkerhebels an dem ersten Verkleidungselement ist vorzugsweise relativ zu einer Schwenkachse, um welche das erste Verkleidungselement schwenkbar gelagert ist, versetzt. Auf diese Weise kann das erste Verkleidungselement durch den Lenkerhebel verschwenkt werden, wenn die Exzenterscheibe durch den Aktor oder Motor gedreht wird.

Die Übertotpunktlage in der wenigstens einen Sperrstellung resultiert bevorzugt daraus, dass der Anlenkpunkt des Lenkerhebels an dem ersten Verkleidungselement, ein Anlenkpunkt des Lenkerhebels an der Exzenterscheibe, und ein Mittelpunkt der Exzenterscheibe, durch den die Drehachse der Exzenterscheibe verläuft, in der Sperrstellung nicht kollinear zueinander angeordnet sind, wobei vielmehr der Anlenkpunkt des Lenkerhebels an der Exzenterscheibe - ausgehend von der anderen Funktionsstellung gesehen - in der Sperrstellung über die kollineare Totpunktlage hinaus weiter verlagert ist, sodass er für eine Verlagerung in die andere Funktionsstellung durch die Totpunktlage hindurch verlagert werden müsste. Dies kann aber nur durch aktives Verschwenken der Exzenterscheibe durch den Aktor oder Motor - gegen eine der Verlagerung in die Totpunktlage entgegenwirkende Kraft - bewirkt werden, während an dem ersten Verkleidungselement - von außen - angreifende Kräfte über den Lenkerhebel derart in die Exzenterscheibe eingeleitet werden, dass diese in die der anderen Funktionsstellung entgegengerichtete Drehrichtung gedrängt wird, wobei diese Kräfte vorzugsweise durch das Anschlagelement abgestützt werden, welches eine weitere Verdrehung der Exzenterscheibe über die Sperrstellung hinaus verhindern.

Das Anschlagelement ist vorzugsweise an der Exzenterscheibe angeordnet - insbesondere an dieser befestigt oder einstückig mit ihr ausgebildet -, wobei es bevorzugt in einer der beiden Funktionsstellungen an dem ersten Verkleidungselement anschlägt, wobei dieses hierdurch sogar noch weiter in die entsprechende Funktionsstellung gedrängt wird. In der anderen der beiden Funktionsstellungen wirkt es bevorzugt mit dem Lenkerhebel zusammen, sodass der Lenkerhebel an dem Anschlagelement anschlägt, wodurch ebenfalls eine weitere Verdrehung der Exzenterscheibe verhindert wird.

Gemäß einer Weiterbildung der Erfindung ist vorgesehen, dass das erste Verkleidungselement um eine an einem oberen Ende des ersten Verkleidungselements angeordnete und in Längsrichtung der Verkleidungsanordnung verlaufende Schwenkachse schwenkbar gelagert ist.

Die Begriffe "oben" und "unten" sprechen hier stets Richtungen an, die sich auf eine bestimmungsgemäße Einbaulage der Verkleidungsanordnung an einer Fahrzeugkarosserie beziehen. "Oben" Bedeutet dabei insbesondere "in Richtung eines Fahrzeugdaches gesehen", wobei "unten" insbesondere "in Richtung einer Aufstandsfläche, auf welcher das Fahrzeug aufsteht, gesehen" bedeutet. Die Längsrichtung der Verkleidungsanordnung ist bevorzugt zugleich eine Längsrichtung der Karosserie oder des Fahrzeugs. Die schwenkbare Verlagerbarkeit des ersten Verkleidungselements kann beispielsweise durch einen Schwenkzapfen bewirkt sein, aber auch ein Filmscharnier oder andere geeignete Möglichkeiten der schwenkbaren Lagerung des ersten Verkleidungselements sind denkbar.

Gemäß einer Weiterbildung der Erfindung ist vorgesehen, dass das erste Verkleidungselement sich nur bereichsweise entlang der Längserstreckung der Verkleidungsanordnung erstreckt. Die Verkleidungsanordnung weist insbesondere mit dem ersten Verkleidungselement einen beweglichen Teil und zumindest mit dem zweiten Verkleidungselement, oder gegebenenfalls mit weiteren Verkleidungselementen - einen feststehenden Teil auf, wobei sich der bewegliche Teil der Verkleidungsanordnung nur über einen Teil der Längserstreckung der gesamten Verkleidungsanordnung, und insbesondere nur über einen Teil eines zu verkleidenden Karosserieelements erstreckt. Dabei kann die räumlich-geometrische Ausgestaltung des ersten Verkleidungselements insbesondere auf einen Bereich abgestimmt sein, in welchem in der Komfortstellung Bauraum für eine erhöhte Bequemlichkeit eines Nutzers des Fahrzeugs benötigt wird. Insbesondere kann das erste Verkleidungselement nur im Bereich einer Fahrzeugtür und/oder nur in einem Bereich vorgesehen sein, in welchem mehr Bauraum für Beine eines Nutzers beim Ein- und Aussteigen benötigt wird. Die Verkleidungsanordnung kann dadurch einfach und kostengünstig ausgestaltet werden, weil eine höhere Komplexität in Form des beweglichen, ersten Verkleidungselements nur dort bereitgestellt wird, wo dies tatsächlich gebraucht wird.

Gemäß einer Weiterbildung der Erfindung ist vorgesehen, dass die Verkleidungsanordnung wenigstens ein drittes Verkleidungselement aufweist, welches relativ zu dem ersten Verkleidungselement - und vorzugsweise relativ zu einer Fahrzeugkarosserie - feststeht. An dem wenigstens einen dritten Verkleidungselement ist ein erster Anschlag angeordnet, an welchem das erste Verkleidungselement in seiner ersten Funktionsstellung anschlägt. Zusätzlich oder alternativ ist an dem dritten Verkleidungselement ein zweiter Anschlag angeordnet, an welchem das erste Verkleidungselement in seiner zweiten Funktionsstellung anschlägt. Somit können an dem dritten Verkleidungselement definierte Anschläge für das erste Verkleidungselement in wenigstens einer Funktionsstellung, vorzugsweise in beiden Funktionsstellungen, bereitgestellt werden, die zusätzlich zu einer Abstützung des ersten Verkleidungselements in den Funktionsstellungen und zu einer Definition der Funktionsstellungen beitragen. Das zweite Verkleidungselement und das dritte Verkleidungselement können einstückig und/oder materialeinheitlich miteinander ausgebildet sein.

Gemäß einer Weiterbildung der Erfindung ist vorgesehen, dass die Verstelleinrichtung in einem Bereich der Verkleidungsanordnung angeordnet ist, der bei bestimmungsgemäßer Montage der Verkleidungsanordnung an einem zu verkleidenden Karosserieelement nicht in Überdeckung mit dem zu verkleidenden Karosserieelement ist. Ist beispielsweise das zu verkleidende Karosserieelement ein Längsträger, ist die Verstelleinrichtung vorzugsweise im Bereich einer Säule der Karosserie, beispielsweise im Bereich der A-Säule oder der B-Säule, welche auch als Mittelsäule bezeichnet wird, angeordnet. Dies ist deswegen vorteilhaft, weil gerade in solchen Bereichen genügend Bauraum zur Verfügung steht, um die Verstelleinrichtung unterzubringen.

Gemäß einer Weiterbildung der Erfindung ist vorgesehen, dass das erste Verkleidungselement eine C-förmige Querschnittskontur aufweist. Vorzugsweise weist auch das zweite Verkleidungselement eine C-förmige Querschnittskontur auf. Wie bereits ausgeführt, weisen das erste und das zweite Verkleidungselement bevorzugt eine gleiche Querschnittskontur auf. Eine geöffnete Seite des C ist dabei einem Inneren der Verkleidungsanordnung zugewandt. Somit ist die geschlossene Seite des C einer Außenseite der Verkleidungsanordnung zugewandt, sodass sie einen effektiven Schutz insbesondere gegen Steinschlag und Schmutz bereitstellen kann.

Das wenigstens eine dritte Verkleidungselement ist bevorzugt L-förmig ausgebildet, insbesondere in Form eines liegenden L, wobei ein erster, vorzugsweise längerer Schenkel des L eine Unterseite der Verkleidungsanordnung bildet, und wobei ein zweiter, vorzugsweise kürzerer Schenkel des L die Verkleidungsanordnung in Richtung eines Fahrzeuginneren, insbesondere in Richtung einer Fahrzeugmittellängsachse, abschließt. An dem ersten Schenkel des L ist bevorzugt der erste Anschlag für das erste Verkleidungselement angeordnet, an welchem dieses in der ersten Funktionsstellung anschlägt. An dem zweiten Schenkel des L ist bevorzugt der zweite Anschlag für das erste Verkleidungselement angeordnet, an welchem dieses in der zweiten Funktionsstellung anschlägt.

Die Schwenkachse, um welche das erste Verkleidungselement schwenkbar gelagert ist, ist bevorzugt im Bereich eines oberen Bogens der C-förmigen Querschnittskontur des ersten Verkleidungselements angeordnet.

Gemäß einer Weiterbildung der Erfindung ist schließlich vorgesehen, dass die Verkleidungsanordnung als Längsträgerverkleidung für ein Kraftfahrzeug, insbesondere für einen Personenkraftwagen, ausgebildet ist. Bei dieser Ausgestaltung verwirklichen sich in besonderer Weise die bereits beschriebenen Vorteile der Verkleidungsanordnung. Insbesondere kann eine Fahrzeugtür in der ersten, ausgestellten Funktionsstellung des ersten Verkleidungselements, welche eine Schutzstellung darstellt, vor Steinschlag, Schmutz und damit letztlich auch vor Korrosion geschützt werden, wobei in der zweiten, eingeklappten Funktionsstellung, die eine Komfortstellung ist, zusätzlicher Raum für Beine eines Nutzers des Fahrzeugs freigegeben werden kann, um den Komfort beim Ein- und Aussteigen zu erhöhen. Das schwenkbar gelagerte, erste Verkleidungsteil erstreckt sich also zumindest über einen Teillängsbereich des Längsträgers/Seitenschwellers im Bereich des karosserieseitigen Türausschnitts.

Der Gegenstand der Erfindung betrifft auch ein Kraftfahrzeug nach Anspruch 9.

Die Erfindung wird im Folgenden anhand der Zeichnung näher erläutert. Dabei zeigen:
- Figur 1: eine schematische, teilweise perspektivische Darstellung eines Ausführungsbeispiels einer Verkleidungsanordnung mit einem ersten, schwenkbaren Verkleidungselement in einer ersten Funktionsstellung;
- Figur 2: das Ausführungsbeispiel der Verkleidungsanordnung gemäß Figur 1 in einer ersten Zwischenstellung zwischen der ersten Funktionsstellung und einer zweiten Funktionsstellung;
- Figur 3: das Ausführungsbeispiel der Verkleidungsanordnung gemäß den Figuren 1 und 2 in einer zweiten Zwischenstellung zwischen der ersten Funktionsstellung und der zweiten Funktionsstellung;
- Figur 4: das Ausführungsbeispiel der Verkleidungsanordnung gemäß den Figuren 1 bis 3 in der zweiten Funktionsstellung;
- Figur 5: eine andere Ansicht des Ausführungsbeispiels der Verkleidungsanordnung gemäß den Figuren 1 bis 4 in der ersten Funktionsstellung und
- Figur 6: die Ansicht gemäß Figur 5 mit der Verkleidungsanordnung in der zweiten Funktionsstellung.

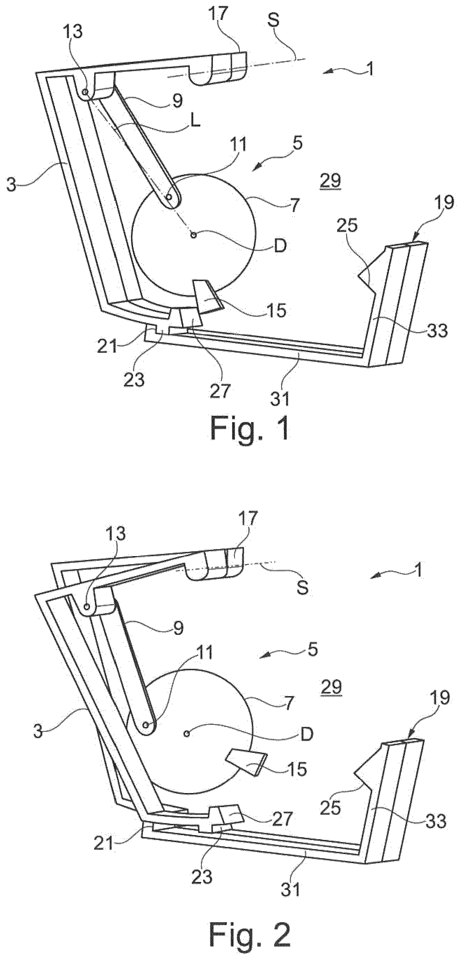

Figur 1 zeigt ein Ausführungsbeispiel einer Verkleidungsanordnung 1, die ausgebildet ist zur Verkleidung eines Karosserieelements eines Fahrzeugs, wobei die Verkleidungsanordnung 1 insbesondere als Längsträgerverkleidung/Schwellerverkleidung für ein Kraftfahrzeug, vorzugsweise für einen Personenkraftwagen, ausgebildet ist.

Bei dem Karosserieelement handelt es sich also beispielsweise um einen in den Figuren nicht dargestellten, jedoch bekannten Seitenschweller, welcher Teil der Karosserietragstruktur/des Karosserierohbaus ist und im Bereich einer seitlichen Türausschnittsöffnung der Karosserie angeordnet ist. Der einen Teil der tragenden Struktur des Fahrzeugs bildende Seitenschweller begrenzt die Türausschnittsöffnung nach unten hin. Der die tragende Struktur bildende Teil des Seitenschwellers ist üblicherweise ein mindestens einen Hohlraum umfassendes Profilteil, welches aus Schalenelementen zusammengesetzt oder als Strangpressprofilteil ausgebildet ist. Diese tragende Struktur des Seitenschwellers wird mittels der Verkleidungsanordnung 1 nach außen hin abgedeckt.

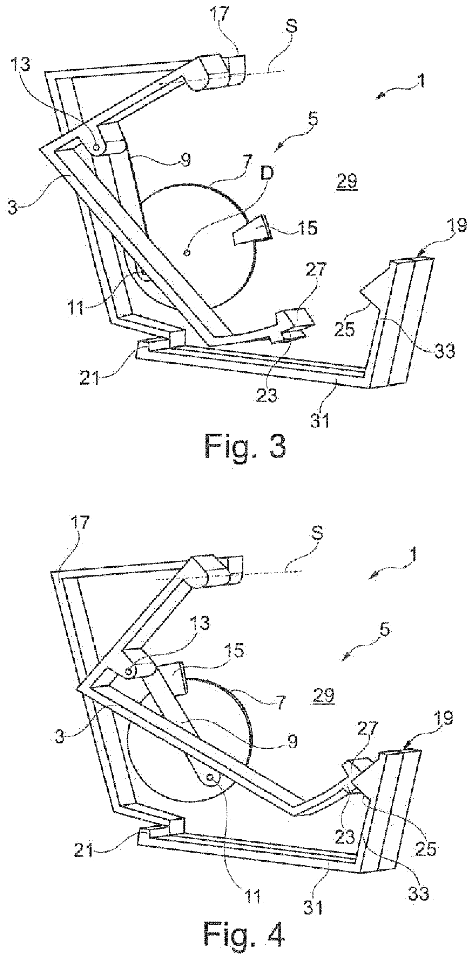

Die Verkleidungsanordnung 1 weist ein schwenkbar gelagertes, erstes Verkleidungselement 3 auf, welches in eine in Figur 1 dargestellte, erste Funktionsstellung und in eine in Figur 4 dargestellte, zweite Funktionsstellung verlagerbar, insbesondere verschwenkbar ist. Das Verkleidungselement 3 ist formstabil ausgebildet, das heißt es weist eine zumindest so große Eigensteifigkeit beziehungsweise Eigenstabilität auf, dass es - anders als ein flexibles Flächengebilde, beispielsweise Textil- oder Membranbahn - nicht in sich zusammenfällt, sondern in seiner Form gleichbleibend um eine Achse schwenkbar ist. Um diese Verlagerung zu bewirken ist eine Verstelleinrichtung 5 vorgesehen. Diese ist eingerichtet, um das erste Verkleidungselement 3 in wenigstens einer der beiden Funktionsstellungen, die auch als Sperrstellung bezeichnet wird, zu arretieren. Die erste Funktionsstellung ist dabei eine ausgestellte Schutzstellung des ersten Verkleidungselements 3, in welcher dieses so angeordnet und eingerichtet ist, dass es ein anderes Karosserieelement, insbesondere eine Tür, vorzugsweise während einer Fahrt des Kraftfahrzeugs, vor Steinschlag, Schmutz und letztlich Korrosion schützen kann, wobei die zweite Funktionsstellung eine eingeklappte Komfortstellung ist, in welcher das erste Verkleidungselement 3 Bauraum freigibt, um den Komfort eines Nutzers des Fahrzeugs beim Ein- und Aussteigen zu erhöhen, insbesondere um für diese Bewegungsvorgänge zusätzliche Beinfreiheit bereitzustellen. Dabei hat die Arretierung des ersten Verkleidungselements 3 durch die Verstelleinrichtung 5 in wenigstens einer der beiden Funktionsstellungen, vorzugsweise in beiden Funktionsstellungen, den Vorteil, dass die Funktionsstellungen zum einen genau definiert sein können, wobei zum anderen insbesondere von außen an dem ersten Verkleidungselement 3 angreifende Kräfte nicht zu einer ungewollten Verlagerung aus einer Funktionsstellung heraus in die jeweils andere Funktionsstellung führen können.

Die Verstelleinrichtung 5 ist - insbesondere in Kombination mit dem ersten Verkleidungselement 3 - hier in der ersten Funktionsstellung in einer Übertotpunktlage angeordnet. Insoweit zeigt sich, dass die Verstelleinrichtung 5 bei dem hier dargestellten Ausführungsbeispiel eine aktorisch oder motorisch angetriebene Exzenterscheibe 7 aufweist, die um eine Drehachse D drehbar gelagert und vorzugsweise durch einen hier nicht dargestellten Aktor oder Motor, insbesondere einen Elektromotor, zu einer Drehung um die Drehachse D antreibbar ist. Dabei ist der Aktor oder Motor bevorzugt über ein selbsthemmendes Getriebe mit der Exzenterscheibe 7 gekoppelt, was bevorzugt zusätzlich zur Arretierung des ersten Verkleidungselements 3 in der wenigstens eine Sperrstellung beiträgt. An der Exzenterscheibe 7 ist außermittig, das heißt in einem Abstand zur Drehachse D und damit exzentrisch ein Lenkerhebel 9 angelenkt, der seinerseits wiederum an dem ersten Verkleidungselement 3 angelenkt ist. Insbesondere ist der Lenkerhebel 9 mit einem ersten Ende in einem ersten Anlenkpunkt 11 an der Exzenterscheibe 7, und mit einem gegenüberliegenden, zweiten Ende in einem zweiten Anlenkpunkt 13 an dem ersten Verkleidungselement 3 angelenkt. Wird die Exzenterscheibe 7 - in den Figuren 1 bis 4 entgegen dem Uhrzeigersinn - um die Drehachse D geschwenkt, bewirkt die Kopplung der Exzenterscheibe 7 über den Lenkerhebel 9 mit dem ersten Verkleidungselement 3, dass dieses aus der ersten Funktionsstellung in die zweite Funktionsstellung verschwenkt wird. Umgekehrt bewirkt dann eine Drehung der Exzenterscheibe 7 im Uhrzeigersinn ein Verschwenken des ersten Verkleidungselements 3 aus der zweiten Funktionsstellung zurück in die erste Funktionsstellung.

In Figur 1 ist eine gestrichelte Linie L eingezeichnet, welche die Drehachse D und damit den Mittelpunkt der Exzenterscheibe 7 mit dem zweiten Anlenkpunkt 13 verbindet. Dabei wird deutlich, dass bei in ersten Funktionsstellung angeordnetem Verkleidungselement 3 der erste Anlenkpunkt 11 nicht kollinear mit dem zweiten Anlenkpunkt 13 und dem Mittelpunkt der Exzenterscheibe 7 angeordnet, sondern vielmehr aus der kollinearen Lage - die auch als Totpunktlage bezeichnet wird - etwas weiter in Richtung der ersten Funktionsstellung, das heißt im Uhrzeigersinn über die Totpunktlage hinaus, verlagert ist. Soll das erste Verkleidungselement 3 aus der ersten Funktionsstellung in die zweite Funktionsstellung verlagert werden, muss die Exzenterscheibe 7 durch den Aktor oder Motor entgegen dem Uhrzeigersinn so gedreht werden, dass der erste Anlenkpunkt 11 über die Totpunktlage hinüber verlagert wird. Dazu wiederum muss das erste Verkleidungselement 3 etwas weiter über seine Position in der ersten Funktionsstellung hinaus gedrängt werden, wofür insbesondere eine Kraft aufgewendet werden muss. Zur Verlagerung des ersten Verkleidungselements 3 aus der ersten Funktionsstellung heraus muss also gegen eine Kraft gearbeitet werden, welche dieser Verlagerung entgegenwirkt. In der Übertotpunktlage des ersten Anlenkpunkts 11 ist das erste Verkleidungselement 3 in seiner ersten Funktionsstellung arretiert. Kräfte, die an dem ersten Verkleidungselement 3 angreifen und versuchen, dieses aus der ersten Funktionsstellung in Richtung seiner zweiten Funktionsstellung zu drängen, bewirken in der Übertotpunktlage des ersten Anlenkpunkts 11, dass dieser in Figur 1 mit einem im Uhrzeigersinn wirkenden Drehmoment beaufschlagt wird, also entgegen dem Drehsinn, welcher für eine Verlagerung in die zweite Funktionsstellung eigentlich nötig ist. In diese Richtung kann die Exzenterscheibe 7 allerdings nicht weiter verlagert werden, weil sie mit einem an der Exzenterscheibe 7 angeordneten Anschlagelement 15 an dem ersten Verkleidungselement 3 derart anschlägt, dass eine weitere Verdrehung der Exzenterscheibe 7 im Uhrzeigersinn nicht möglich ist.

Dass das Anschlagelement 15 an dem ersten Verkleidungselement 3 anschlägt hat den weiteren Vorteil, dass die Exzenterscheibe 7 das erste Verkleidungselement 3 bei ihrer Drehbewegung in Richtung der ersten Funktionsstellung mit dem Anschlagelement 15 kraftbeaufschlagt und so zusätzlich in die erste Funktionsstellung drängen kann.

Das erste Verkleidungselement 3 ist um eine an einem oberen Ende desselben angeordnete, in Längsrichtung der Verkleidungsanordnung 1 und damit parallel zur Fahrzeuglängsachse verlaufende Schwenkachse S schwenkbar gelagert. Die Schwenkachse S ist hier durch eine strichpunktierte Linie dargestellt. Das erste Verkleidungselement 3 kann im Bereich der Schwenkachse S mittels eines Schwenkzapfens, eines Filmscharniers, oder in anderer geeigneter Weise gelagert sein.

Die Verkleidungsanordnung 1 weist ein zweites Verkleidungselement 17 auf, welches relativ zu dem ersten Verkleidungselement 3 feststeht. Das erste Verkleidungselement 3 ist an dem zweiten Verkleidungselement 17 schwenkbar angelenkt, besonders bevorzugt mittels eines Führungs- oder Schwenkzapfens.

Dabei zeigt sich auch, dass sich das erste Verkleidungselement 3 nur bereichsweise entlang der Längserstreckung, das heißt insbesondere in Richtung der Schwenkachse S, der Verkleidungsanordnung 1 erstreckt.

Die Verkleidungsanordnung 1 weist außerdem wenigstens ein drittes, hier genau ein drittes Verkleidungselement 19 auf, das ebenfalls relativ zu dem ersten Verkleidungselement 3 feststeht. An dem dritten Verkleidungselement 19 ist ein erster Anschlag 21 angeordnet, an welchem das erste Verkleidungselement 3 - hier mit einem ersten Vorsprung 23 - in der ersten Funktionsstellung anschlägt. Zusätzlich weist das dritte Verkleidungselement 19 einen zweiten Anschlag 25 auf, an welchem das erste Verkleidungselement 3 in der zweiten Funktionsstellung - hier ebenfalls mit dem ersten Vorsprung 23 - anschlägt. Das Anschlagelement 15, das an der Exzenterscheibe 7 befestigt oder mit der Exzenterscheibe 7 einstückig ausgebildet ist, schlägt in der ersten Funktionsstellung bevorzugt an einem zweiten Vorsprung 27 des ersten Verkleidungselements 3 an.

Die Verstelleinrichtung 5 ist bei bestimmungsgemäßer Montage an einem zu verkleidenden Karosserieelement, insbesondere einem auch allgemein als Schweller, Seiten- oder Türschweller bezeichneten Längsträger, bevorzugt in einem Bereich der Verkleidungsanordnung 1 angeordnet, welcher nicht in Überdeckung mit dem zu verkleidenden Karosserieelement, also bevorzugt dem Längsträger, ist. Insbesondere ist die Verstelleinrichtung 5 bevorzugt in an einer Kraftfahrzeugkarosserie montiertem Zustand im Bereich einer Säule, vorzugsweise im Bereich einer A-Säule angeordnet, wo genügend Bauraum zur Verfügung steht, um die Verstelleinrichtung 5 unterzubringen.

Aus Figur 1 wird auch deutlich, dass das erste Verkleidungselement 3 und hier auch das zweite Verkleidungselement 17 jeweils eine C-förmige Querschnittskontur aufweisen. Dabei ist eine geöffnete Seite des C einem Inneren 29 der Verkleidungsanordnung 1 zugewandt. In der ersten Funktionsstellung fluchtet das erste Verkleidungselement 3 mit dem zweiten Verkleidungselement 17 und schließt insbesondere bündig mit diesem ab. Insbesondere sind die beiden Querschnittskonturen der Verkleidungselemente 3, 17 in der ersten Funktionsstellung miteinander in Überdeckung.

Das dritte Verkleidungselement 19 ist L-förmig ausgebildet, wobei es hier als liegendes L derart angeordnet ist, dass ein erster, längerer Schenkel 31 des L eine Unterseite der Verkleidungsanordnung 1 bildet, wobei ein zweiter, kürzerer Schenkel des L sich ausgehend von dem ersten Schenkel 31 nach oben erstreckt und eine Abschlusswandung zu einem Inneren oder zu einer Mittellängsachse einer Fahrzeugkarosserie hin darstellt. Der erste Anschlag 21 ist an dem ersten Schenkel 31 angeordnet. Der zweite Anschlag 25 ist an dem zweiten Schenkel 33 angeordnet.

Figur 2 zeigt eine Darstellung des Ausführungsbeispiels der Verkleidungsanordnung 1 gemäß Figur 1 in einer ersten Zwischenstellung zwischen der ersten Funktionsstellung und der zweiten Funktionsstellung. Gleiche und funktionsgleiche Elemente sind mit gleichen Bezugszeichen versehen, sodass insofern auf die vorangegangene Beschreibung verwiesen wird. Dabei zeigt sich, dass die Schwenkbewegung des ersten Verkleidungselements 3 aus der ersten Funktionsstellung in die zweite Funktionsstellung durch die Verstelleinrichtung 5 bewirkt wird, indem die Exzenterscheibe 7 - ausgehend von der in Figur 1 dargestellten Position - entgegen dem Uhrzeigersinn gedreht wird, wobei die Drehbewegung der Exzenterscheibe 7 über den Lenkerhebel 9 in die Schwenkbewegung des ersten Verkleidungselements 3 um die Achse S umgesetzt wird. Das Anschlagelement 15 wird entsprechend der Drehbewegung der Exzenterscheibe 7 von dem zweiten Vorsprung 27 weg verlagert, sodass dieser frei ausschwenken kann. Es wird auch deutlich, dass die kollineare Totpunktlage des ersten Anlenkpunkts 11, des zweiten Anlenkpunkts 13 und des Mittelpunkts der Exzenterscheibe 7 ausgehend von der in Figur 1 dargestellten Position überwunden werden muss, um zu der in Figur 2 dargestellten Zwischenstellung zu gelangen.

Figur 3 zeigt eine zweite Zwischenstellung zwischen der ersten Funktionsstellung und der zweiten Funktionsstellung des Ausführungsbeispiels der Verkleidungsanordnung 1 gemäß den Figuren 1 und 2. Gleiche und funktionsgleiche Elemente sind mit gleichen Bezugszeichen versehen, sodass insofern auf die vorangegangene Beschreibung verwiesen wird. Dabei ist hier die Exzenterscheibe 7 noch weiter in Richtung entgegen dem Uhrzeigersinn ausgehend von Figur 1 verdreht, und entsprechend ist das erste Verkleidungselement 3 weiter aus seiner ersten Funktionsstellung heraus in Richtung seiner zweiten Funktionsstellung verschwenkt.

Figur 4 zeigt eine Darstellung des Ausführungsbeispiels der Verkleidungsanordnung 1 gemäß den Figuren 1 bis 3 in der zweiten Funktionsstellung. Gleiche und funktionsgleiche Elemente sind mit gleichen Bezugszeichen versehen, sodass insofern auf die vorangegangene Beschreibung verwiesen wird. Dabei zeigt sich, dass der Lenkerhebel 9 in der zweiten Funktionsstellung an dem Anschlagelement 15 anschlägt, sodass die Verstelleinrichtung 5 einerseits das Anschlagelement 15 aufweist und andererseits selbst in der als Sperrstellung ausgestalteten zweiten Funktionsstellung an dem Anschlagelement 15 - hier mit dem Lenkerhebel 9 - anliegt, wobei sie auch durch eine in Richtung entgegen der Sperrstellungen auf das erste Verkleidungselement 3 wirkende Kraft gegen das Anschlagelement 15 gedrängt wird. Insoweit ist nämlich - was hier aufgrund der gewählten Perspektive schwer zu erkennen ist - auch in der zweiten Funktionsstellung eine Übertotpunktlage der Anlenkpunkte 11, 13 erreicht. Daraus ergibt sich zum einen eine Arretierung für die zweite Funktionsstellung; zum anderen bewirkt eine an dem ersten Verkleidungselement 3 angreifende Kraft, die versucht, dieses in Richtung der ersten Funktionsstellung zur drängen, ein Drehmoment in dem ersten Anlenkpunkt 11, welches versucht, die Exzenterscheibe 7 weiter entgegen dem Uhrzeigersinn zu drehen, was jedoch nicht möglich ist, da der Lenkerhebel 9 an dem Anschlagelement 15 anschlägt und diese weitere Verdrehung sperrt.

Zugleich schlägt das erste Verkleidungselement 3 mit dem ersten Vorsprung 23 an dem zweiten Anschlag 25 an, sodass auch insoweit die zweite Funktionsstellung definiert und abgestützt ist.

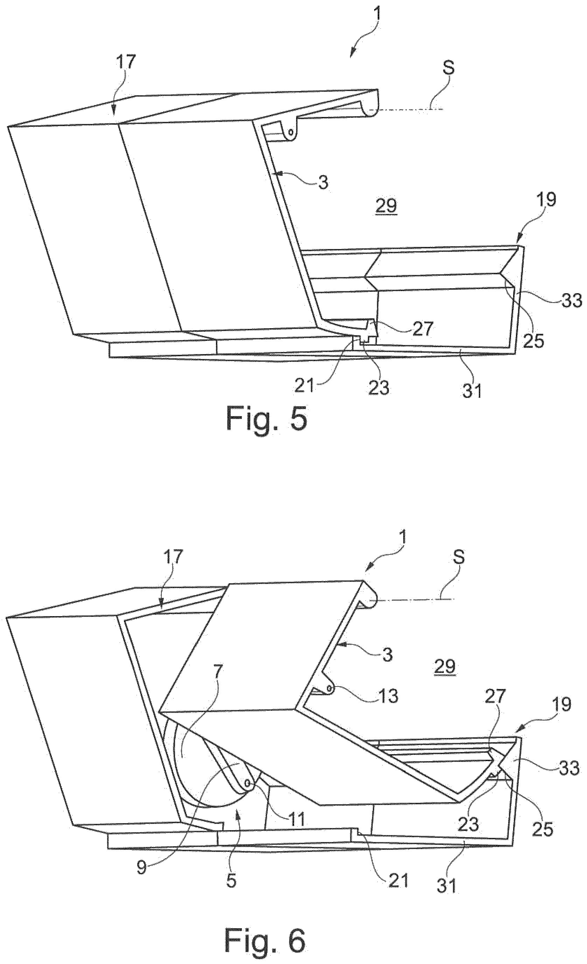

Figur 5 zeigt eine weitere Ansicht des Ausführungsbeispiels der Verkleidungsanordnung 1 gemäß den Figuren 1 bis 4. Gleiche und funktionsgleiche Elemente sind mit gleichen Bezugszeichen versehen, sodass insofern auf die vorangegangene Beschreibung verwiesen wird. Dabei ist hier deutlich erkennbar, dass das erste Verkleidungselement 3 und das zweite Verkleidungselement 17 eine gleiche Querschnittskontur aufweisen und in der ersten Funktionsstellung bündig und fluchtend miteinander angeordnet sind.

Figur 6 zeigt eine weitere, zu der Darstellung gemäß Figur 5 analoge Darstellung des Ausführungsbeispiels der Verkleidungsanordnung 1 gemäß den Figuren 1 bis 5. Gleiche und funktionsgleiche Elemente sind mit gleichen Bezugszeichen versehen, sodass insofern auf die vorangegangene Beschreibung verwiesen wird. Dabei ist hier deutlich die eingeklappte Position des ersten Verkleidungselements 3 in der zweiten Funktionsstellung erkennbar, sodass ebenfalls deutlich wird, dass durch das erste Verkleidungselement 3 in der auch als Komfortstellung bezeichneten zweiten Funktionsstellung Raum freigegeben wird, der beispielsweise für Beine eines Nutzers eines Fahrzeugs zur Verfügung steht, um die Bequemlichkeit beim Ein- und Aussteigen zu steigern.

Ein wichtiger Aspekt der hier vorgeschlagenen Verkleidungsanordnung 1 ist insbesondere, dass die Verstelleinrichtung 5 bevorzugt in beiden Funktionsstellungen, nämlich in der ersten Funktionsstellung und in der zweiten Funktionsstellung, jeweils in einer Übertotpunktlage angeordnet ist, wobei zusätzlich die Verstelleinrichtung 5 und/oder das erste Verkleidungselement 3 jeweils an einem definierten Anschlag anliegt/anliegen, sodass das erste Verkleidungselement 3 sicher und stabil in einer definierten Position gehalten wird, und zwar vorzugsweise in beiden Funktionsstellungen.

Insgesamt zeigt sich, dass mit der hier vorgeschlagenen Verkleidungsanordnung 1 eine Verkleidungsanordnung bereitgestellt wird, welche bezüglich der Genauigkeit ihrer Funktionsweise und ihrer Betriebssicherheit verbessert ist.

## Patentansprüche

1. Verkleidungsanordnung (1) zur Verkleidung eines Karosserieelements eines Fahrzeugs, mit
- einem schwenkbar gelagerten, ersten Verkleidungselement (3), das
- in eine erste Funktionsstellung und in eine zweite Funktionsstellung verlagerbar ist, mit
- einem zweiten, relativ zu dem ersten Verkleidungselement (3) feststehenden Verkleidungselement (17), an dem das erste Verkleidungselement (3) schwenkbar angelenkt ist, und mit
- einer Verstelleinrichtung (5) zur Verstellung des ersten Verkleidungselements (3) von der ersten Funktionsstellung in die zweite Funktionsstellung und/oder von der zweiten Funktionsstellung in die erste Funktionsstellung,
**dadurch gekennzeichnet, dass**
die Verstelleinrichtung (5) so ausgebildet ist, um das erste Verkleidungselement (3) in wenigstens einer als Sperrstellung bezeichneten Funktionsstellung, die ausgewählt ist aus der ersten Funktionsstellung und der zweiten Funktionsstellung, gegen eine Verlagerung aus der Sperrstellung heraus zu sichern und dass die Verkleidungsanordnung (1) wenigstens ein Anschlagelement (15) aufweist, das so angeordnet ist, dass die Verstelleinrichtung (5) in der wenigstens einen Sperrstellung mit dem wenigstens einen Anschlagelement (15) an einem Anschlag oder an dem wenigstens einen Anschlagelement (15) anliegt.

2. Verkleidungsanordnung (1) nach Anspruch 1,
**dadurch gekennzeichnet, dass**
die Verstelleinrichtung (5) und/oder das erste Verkleidungselement (3) in Kombination mit der Verstelleinrichtung (5) in der wenigstens einen Sperrstellung in einer Übertotpunktlage angeordnet ist/sind.

3. Verkleidungsanordnung (1) nach Anspruch 1,
**dadurch gekennzeichnet, dass**
die Verkleidungsanordnung (1) in der Sperrstellung durch eine in Richtung entgegen der Sperrstellung auf das erste Verkleidungselement (3) wirkende Kraft gegen das Anschlagelement (15) gedrängt wird.

4. Verkleidungsanordnung (1) nach einem der vorhergehenden Ansprüche,
**dadurch gekennzeichnet, dass**
das erste Verkleidungselement (3) um eine an einem oberen Ende des ersten Verkleidungselements (3) angeordnete, in Längsrichtung der Verkleidungsanordnung (1) verlaufende Schwenkachse (S) schwenkbar gelagert ist.

5. Verkleidungsanordnung (1) nach einem der vorhergehenden Ansprüche,
**dadurch gekennzeichnet, dass**
das erste Verkleidungselement (3) sich nur bereichsweise entlang der Längserstreckung des Karosserieelements erstreckt.

6. Verkleidungsanordnung (1) nach einem der vorhergehenden Ansprüche,
**gekennzeichnet durch**
wenigstens ein drittes, relativ zu dem ersten Verkleidungselement (3) feststehendes Verkleidungselement (19), an dem ein erster Anschlag (21) für das erste Verkleidungselement (3) in der ersten Funktionsstellung und/oder ein zweiter Anschlag (25) für das erste Verkleidungselement (3) in der zweiten Funktionsstellung angeordnet ist/sind.

7. Verkleidungsanordnung (1) nach einem der vorhergehenden Ansprüche,
**dadurch gekennzeichnet, dass**
die Verstelleinrichtung (5) in einem Bereich der Verkleidungsanordnung (1) angeordnet ist, der bei bestimmungsgemäßer Montage an einem zu verkleidenden Karosserieelement nicht in Überdeckung mit dem zu verkleidenden Karosserieelement oder einem Teillängsbereich des Karosserieelements ist.

8. Verkleidungsanordnung (1) nach einem der vorhergehenden Ansprüche,
**dadurch gekennzeichnet, dass**
das erste Verkleidungselement (3) und das zweite Verkleidungselement (17) eine C-förmige Querschnittskontur aufweisen, wobei eine geöffnete Seite des C einem Inneren (29) der Verkleidungsanordnung (1) zugewandt ist, und wobei das wenigstens eine dritte Verkleidungselement (19) L-förmig ausgebildet ist und an einem ersten Schenkel (31) des L den ersten Anschlag (21) für das erste Verkleidungselement (3) und an einem zweiten Schenkel (33) des L den zweiten Anschlag (25) für das erste Verkleidungselement (3) aufweist.

9. Kraftfahrzeug mit einer seitlichen Türausschnittsöffnung, die unten durch einen Seitenschweller begrenzt ist, der eine tragende Struktur und eine äußere Verkleidungsanordnung (1) nach einem der Ansprüche 1 bis 8 umfasst.

## Claims

1. Covering assembly (1) for covering a body element of a vehicle, comprising:
- a pivotably mounted first covering element (3), which
- can be moved into a first functional position and a second functional position,
- a second covering element (17), which is stationary relative to the first covering element (3) and on which the first coveing element (3) is hinge-mounted, and
- an adjusting device (5) for moving the first covering element (3) from the first functional position to the second functional position and/or from the second functional position to the first functional position,
**characterised in that**
the adjusting device (5) is designed to secure the first covering element (3) at least in one functional position described as locking position and selected from the first functional position and the second functional position against a displacement from the locking position, and **in that** the covering assembly (1) has at least one stop element (15) arranged such that the adjusting device (5) bears in the at least one locking position with the at least one stop element (15) against a stop or the at least one stop element (15).

2. Covering assembly (1) according to claim 1,
**characterised in that**
the adjusting device (5) and/or the first covering element (3) in combination with the adjusting device (5) is/are located in an over-centre position in the at least one locking position.

3. Covering assembly (1) according to claim 1,
**characterised in that**
the covering assembly (1) is forced against the stop element (15) in the locking position by a force acting on the first covering element (3) in a direction against the locking position.

4. Covering assembly (1) according to any of the preceding claims,
**characterised in that**
the first covering element (3) is pivotably mounted about a pivot axis (S) located at an upper end of the first covering element (3) and extending in the longitudinal direction of the first covering element (3).

5. Covering assembly (1) according to any of the preceding claims,
**characterised in that**
the first covering element (3) extends only in some areas along the longitudinal extent of the body element.

6. Covering assembly (1) according to any of the preceding claims,
**characterised by**
at least one third covering element (19), which is stationary relative to the first covering element (3) and on which is/are located a first stop (21) for the first covering element (3) in the first functional position and/or a second stop (25) for the first covering element (3) in the second functional position.

7. Covering assembly (1) according to any of the preceding claims,
**characterised in that**
the adjusting device (5) is located in a region of the covering assembly (1) which, if mounted as intended on a body element to be covered, is not in superimposition with the body element to be covered or with a part-length of the body element.

8. Covering assembly (1) according to any of the preceding claims,
**characterised in that**
the first covering element (3) and the second covering element (17) have a C-shaped cross-sectional contour, wherein an opened side of the C faces an interior (29) of the covering assembly (1) and wherein the at least one third covering element (19) is of an L-shaped design and has the first stop (21) for the first covering element (3) at a first leg (31) of the L and the second stop (25) for the first covering element (3) at a second leg (33) of the L.

9. Motor vehicle with a lateral door cutout opening bounded at the bottom by a side sill comprising a load-bearing structure and a covering assembly (1) according to any of claims 1 to 8.

## Revendications

1. Système d'habillage (1) pour habiller un élément de carrosserie d'un véhicule à moteur, comprenant
- un premier élément d'habillage (3) monté pivotant qui
- peut se déplacer dans une première position de fonctionnement et dans une seconde position de fonctionnement, comprenant
- un second élément d'habillage (17) fixe par rapport au premier élément d'habillage (3) sur lequel est articulé pivotant le premier élément d'habillage (3), et comprenant
- un dispositif de déplacement (5) pour déplacer le premier élément d'habillage (3) de la première position de fonctionnement à la seconde position de fonctionnement et/ou de la seconde position de fonctionnement à la première position de fonctionnement,
**caractérisé en ce que**
le dispositif de déplacement (5) est conçu de manière à rendre impossible que le premier élément d'habillage (3) dans au moins une position de fonctionnement désignée comme étant une position de blocage, qui est choisie parmi la première position de fonctionnement et la seconde position de fonctionnement, ne se déplace de la position de blocage et **en ce que** le système d'habillage (1) comporte au moins un élément de butée (15) disposée de manière à ce que le dispositif de déplacement (5) repose dans ladite position de blocage avec ledit élément de butée (15) sur une butée ou sur ledit élément de butée (15).

2. Système d'habillage (1) selon la revendication 1, **caractérisé en ce que** le dispositif de déplacement (5) et/ou l'élément d'habillage (3) en association avec le dispositif de déplacement (5) est/sont disposé(s) dans ladite position de blocage dans une position de point mort décentrée.

3. Système d'habillage (1) selon la revendication 1, **caractérisé en ce que** le système d'habillage (1) dans la position de blocage est poussé contre l'élément de butée (15) par une force agissant à l'encontre de la position de blocage sur le premier élément d'habillage (3).

4. Système d'habillage (1) selon l'une quelconque des revendications précédentes, **caractérisé en ce que** le premier élément d'habillage (3) est monté pivotant autour d'un axe de pivotement (S) s'étendant dans le sens longitudinal sur une extrémité supérieure du premier élément d'habillage (3).

5. Système d'habillage (1) selon l'une quelconque des revendications précédentes, **caractérisé en ce que** le premier élément d'habillage (3) s'étend longitudinalement à l'élément de carrosserie, uniquement à certains endroits.

6. Système d'habillage (1) selon l'une quelconque des revendications précédentes, **caractérisé par** au moins un troisième élément d'habillage (19) fixe par rapport au premier élément d'habillage (3), sur lequel une première butée (21) pour le premier élément d'habillage (3) est disposé dans la première position de fonctionnement et/ou une seconde butée (25) pour le premier élément d'habillage (3) est disposé(e) dans la seconde position de fonctionnement.

7. Système d'habillage (1) selon l'une quelconque des revendications précédentes, **caractérisé en ce que** le dispositif de déplacement (5) est disposé dans une zone du système d'habillage (1) qui, lorsqu'il est correctement monté sur un élément de carrosserie à habiller, ne vient pas en recouvrement avec l'élément de carrosserie ou avec une zone longitudinale partielle de l'élément de carrosserie à habiller.

8. Système d'habillage (1) selon l'une quelconque des revendications précédentes, **caractérisé en ce que** le premier élément d'habillage (3) et le second élément d'habillage (17) présentent un contour transversal en forme de C, un côté ouvert du C étant orienté en direction de l'intérieur (29) du système d'habillage (1), et ledit troisième élément d'habillage (19) est conçu sous la forme d'un L et présente sur un premier montant (31) du L la première butée (21) pour le premier élément d'habillage (3) et sur un second montant (33) du L la seconde butée (25) pour le premier élément d'habillage (3).

9. Véhicule à moteur comprenant une ouverture de découpe de porte latérale, qui est limitée en dessous par un bas de caisse latéral qui comprenant une structure porteuse et un système d'habillage (1) extérieur selon l'une des revendications 1 à 8.
